(19)

Europäisches Patentamt
European Patent Office
Office européen des brevets

(11)　**EP 4 746 113 A2**

(12)　# EUROPEAN PATENT APPLICATION

(43) Date of publication:
　　 **20.05.2026　Bulletin 2026/21**

(21) Application number: **26169622.3**

(22) Date of filing: **22.04.2022**

(51) International Patent Classification (IPC):
　　 **H01M 10/42** *(2006.01)*

(52) Cooperative Patent Classification (CPC):
　　 **B05C 5/0254; B05C 9/06; H01M 4/0404;**
　　 **H01M 4/0409; B05C 5/027; H01M 4/0471;**
　　 Y02E 60/10; Y02P 70/50

(84) Designated Contracting States:
　　 **AL AT BE BG CH CY CZ DE DK EE ES FI FR GB**
　　 **GR HR HU IE IS IT LI LT LU LV MC MK MT NL NO**
　　 **PL PT RO RS SE SI SK SM TR**

(30) Priority:　**23.04.2021　KR 20210053322**

(62) Document number(s) of the earlier application(s) in
　　 accordance with Art. 76 EPC:
　　 **22792062.6 / 4 328 989**

(71) Applicant: **LG Energy Solution, Ltd.**
　　 **Seoul 07335 (KR)**

(72) Inventors:
　• **KIM, Sue Jin**
　　 **34122 Daejeon (KR)**
　• **RYU, Duk Hyun**
　　 **34122 Daejeon (KR)**
　• **LEE, Kwanhee**
　　 **34122 Daejeon (KR)**
　• **JANG, Jinsu**
　　 **34122 Daejeon (KR)**
　• **LEE, Yunju**
　　 **34122 Daejeon (KR)**
　• **PARK, Geunho**
　　 **34122 Daejeon (KR)**

　• **PARK, Sangjin**
　　 **34122 Daejeon (KR)**
　• **LEE, Taek Soo**
　　 **34122 Daejeon (KR)**
　• **KIM, Guktae**
　　 **34122 Daejeon (KR)**
　• **KIM, Manhyeong**
　　 **34122 Daejeon (KR)**
　• **PARK, Joon Sun**
　　 **34122 Daejeon (KR)**
　• **JEON, Shin Wook**
　　 **34122 Daejeon (KR)**
　• **CHOI, Minhyuck**
　　 **34122 Daejeon (KR)**

(74) Representative: **Goddar, Heinz J.**
　　 **Boehmert & Boehmert**
　　 **Anwaltspartnerschaft mbB**
　　 **Pettenkoferstrasse 22**
　　 **80336 München (DE)**

Remarks:
　　 This application was filed on 31.03.2026 as a
　　 divisional application to the application mentioned
　　 under INID code 62.

(54) **ELECTRODE COATING DIE, ELECTRODE COATING APPARATUS, ELECTRODE MANUFACTURING METHOD, ELECTRODE, ELECTRODE ASSEMBLY, AND SECONDARY BATTERY**

(57)　　An electrode coating die includes a slurry discharge part configured to discharge an active material slurry onto a current collector; and a dam liquid discharge part provided on at least one side of the slurry discharge part and configured to discharge a dam liquid to form a dam layer covering at least a portion of an inclined surface portion provided at an edge portion of an active material slurry layer discharged from the slurry discharge part, and an electrode coating apparatus including the same. Further, the present invention provides a method of manufacturing an electrode, the method including: preparing an active material slurry including an active material, a conductive material, and a solvent; and a coating operation of applying the active material slurry on a current collector.

**EP 4 746 113 A2**

FIG. 4

(a)

(b)

# Description

[Technical Field]

This specification claims priority to and the benefit of Korean Patent Application No. 10-2021-0053323 filed in the Korean Intellectual Property Office on April 23, 2021, and Korean Patent Application No. 10-2022-0049992 filed in the Korean Intellectual Property Office on April 22, 2022, the entire contents of which are incorporated herein by reference.

The present invention relates to an electrode coating die, an electrode coating apparatus, an electrode manufacturing method, an electrode, an electrode assembly, and a secondary battery.

BACKGROUND ART

A secondary battery that is easy to be applied according to product groups and has electrical characteristics, such as high energy density, is generally applied to an Electric Vehicle (EV) and a Hybrid Electric Vehicle (HEV) driven by an electric driving source, as well as portable devices.

These secondary batteries are attracting attention as a new energy source for improving eco-friendliness and energy efficiency because they have the primary advantage of being able to dramatically reduce the use of fossil fuels, and also have the advantage that no by-products are generated from the use of energy.

In order to manufacture a lithium secondary battery, it is common to prepare an electrode by coating an active material slurry on a current collector, and then perform a process of cutting a part of the electrode so that the electrode has a desired shape.

If the ratio of the amount of the active material coated on the positive electrode and the negative electrode cannot be adjusted in the manufacturing process of the battery, the safety of the secondary battery cannot be guaranteed, so that a specific method for controlling the amount of the active material to be coated in the operation of coating the active material slurry on the current collector is required.

[Prior Art Literature]

[Patent Document]

Korean Patent Application Laid-Open No. 10-2013-0024766

DETAILED DESCRIPTION OF THE INVENTION

TECHNICAL PROBLEM

A technical problem of the present invention is to provide an electrode coating die, an electrode coating apparatus, and an electrode manufacturing method, in which a safety problem is alleviated by adjusting the amount of active material coated on an electrode.

Another technical problem of the present invention is to provide an electrode, an electrode assembly, and a secondary battery.

However, the technical problems to be solved by the present invention are not limited to the above problems, and other problems not mentioned will be clearly understood by those skilled in the art from the description of the invention described below.

TECHNICAL SOLUTION

An exemplary embodiment of the present invention provides an electrode coating die, including: a slurry discharge part configured to discharge an active material slurry onto a current collector; and a dam liquid discharge part provided on at least one side of the slurry discharge part and configured to discharge a dam liquid to form a dam layer covering at least a portion of an inclined surface portion provided at an edge portion of an active material slurry layer discharged from the slurry discharge part.

Another exemplary embodiment of the present invention provides an electrode coating apparatus, including: conveyor configured to continuously transfer a current collector of an electrode; and the electrode coating die according to the foregoing exemplary embodiment, which applies the active material layer on the current collector.

Another exemplary embodiment of the present invention provides a method of manufacturing an electrode, the method including: preparing an active material slurry including an active material, a conductive material, and a solvent; and applying the active material slurry on a current collector, in which applying the active material slurry includes forming an active material layer by discharging the active material slurry onto the current collector and discharging a dam liquid so as to form a dam layer covering at least a portion of an inclined surface portion provided on an edge portion of at least one side of an active material slurry layer coated on the current collector at the same time.

Another exemplary embodiment of the present invention provides an electrode including a current collector and an active material layer provided on the current collector, in which the active material layer includes an inclined portion having a height of 80% or less of a height of a highest point and a non-inclined portion having a height of more than 80% of the height of the highest point, and a length from a boundary between the non-inclined portion and the inclined portion to a distal end of the inclined portion is 40% or less of a total length of the active material layer.

Another exemplary embodiment of the present invention provides an electrode assembly in which a first electrode, a separation membrane, and a second electrode are stacked and wound, in which at least one of the first electrode and the second electrode is the electrode according to the foregoing exemplary embodiment.

Another exemplary embodiment of the present invention provides a secondary battery including at least one electrode assembly according to the foregoing exemplary embodiment.

ADVANTAGEOUS EFFECTS

When the electrode active material is coated on the current collector, a sliding section in which the mass of the active material of the active material layer of the negative electrode facing the active material layer of the positive electrode decreases when an electrode assembly including the same is formed may be formed, and due to the load reduction according to the formation of the sliding section, negative electrode lithium is completely deposited, and safety problems, such as explosion, may occur.

According to the exemplary embodiments of the present invention, it is possible to minimize the formation of the sliding section of the negative electrode that is generated in the case of electrode coating for applying the electrode active material on the current collector, particularly, in the case where the negative electrode active material slurry is applied on the current collector. Accordingly, the mass of the active material of the active material layer of the negative electrode facing the active material layer of the positive electrode does not decrease, so that it is possible to solve safety problems that may occur because the ratio of the loading amount of the positive electrode active material and the negative electrode active material in the corresponding region is changed in an undesirable direction.

By solving the above problem, it is possible to maintain the ratio of the amount of active material loaded of the positive electrode and the negative electrode included in the electrode assembly, thereby solving the safety problem and stably increasing the current applied to the battery. Accordingly, it is possible to increase the battery size, and it is also possible to realize high energy density and reduce cost.

However, advantageous effects obtainable through the present invention are not limited to the above-described effects, and other effects not mentioned will be clearly understood by those skilled in the art from the description of the invention described below.

BRIEF DESCRIPTION OF DRAWINGS

The following drawings attached to the present specification illustrate exemplary embodiments of the present invention, and serve to further understand the technical spirit of the present invention together with the detailed description of the present invention to be described later, so that the present invention should not be construed as being limited only to the illustration of the drawings.

FIG. 1 is a diagram schematically illustrating a form in which a first electrode and a second electrode included in an electrode assembly face each other according to a comparative example of the present invention.

FIG. 2 is a diagram (a) illustrating a form of an inclined portion of an active material layer coated by an existing electrode coating die according to the comparative example of the present invention, and a diagram (b) illustrating a form of an inclined portion of an active material layer coated by an electrode coating die according to an exemplary embodiment of the present invention.

FIG. 3 is a diagram schematically illustrating an internal structure of an electrode coating die according to the exemplary embodiment of the present invention.

FIG. 4 is a diagram (a) illustrating an active material slurry layer coated by the existing electrode coating die according to the comparative example of the present invention, and a diagram (b) separately illustrating a slurry layer and a dam layer coated by the electrode coating die according to the exemplary embodiment of the present invention.

FIG. 5 is a diagram schematically illustrating the electrode coating die according to the exemplary embodiment of the present invention.

FIG. 6 is a diagram illustrating the electrode coating die according to the exemplary embodiment of the present invention, and (a) is an overall perspective view and (b) is an exploded perspective view.

FIG. 7 is a diagram illustrating the electrode coating die according to the exemplary embodiment of the present invention, and illustrates a dotted line portion of FIG. 3 as one unit, and (a) is a front view, (b) is a cross-sectional view taken along line X-X, and (c) is a bottom view.

FIG. 8 is a diagram illustrating an electrode coating die according to another exemplary embodiment of (b) of FIG. 7.

FIG. 9 is a diagram illustrating a state where an active material slurry and a dam liquid discharged from the electrode coating die according to the exemplary embodiment of the present invention is applied on a current collector.

FIG. 10 is a diagram illustrating a state where the active material layer is formed on the current collector by using an electrode coating apparatus according to an exemplary embodiment of the present invention.

FIG. 11 is a diagram illustrating an electrode according to the exemplary embodiment of the present invention, and (a) is an overall perspective view and (b) is a perspective view of a cut electrode.

[EXPLANATION OF REFERENCE NUMERALS AND SYMBOLS]

1: First electrode

2: Second electrode

3, 3': Tab part

4: Insulated coating

5: Sliding section

100: Electrode coating die

10: Shim

11: Slurry discharge part

11D: Area of opening of slurry discharge part

11LW: width of slurry discharge part

11SW: height of slurry discharge part

12: Dam liquid discharge part

12D: Area of opening of dam liquid discharge part

12LW: width of dam liquid discharge part

12SW: height of dam liquid discharge part

121: First dam liquid discharge part

122: Second dam liquid discharge part

13: Partition wall

13W: Width of partition wall

14: Slurry passage

15: Dam liquid passage

16: Slurry injection part

17: Dam liquid injection part

20: Support part

21: First support part

22: Second support part

A1: Inclination angle (θ) formed by dam liquid passage with width direction of dam liquid discharge part

A2: Inclination angle (θ) formed by tangent line with current collector at boundary between non-inclined portion and inclined portion

A3: Inclination angle (θ) formed by tangent line with current collector at distal end of inclined portion

30: Current collector

31: Active material slurry layer

32: Dam layer

33: Inclined surface portion

34: Uncoated region

40: Active material layer

41: Inclined portion

41L: Length of inclined portion

42: Non-inclined portion

42L: Length of non-inclined portion

150: Active material slurry tank

151: Dam liquid tank

152, 153: Transfer pump

154, 155: Transfer pipe

200: Electrode coating apparatus

210: conveyor

220: Drying device

C: Coating direction of active material slurry

12LWD: width direction of dam liquid discharge part

12SWD: height direction of dam liquid discharge part

BEST MODE

Terms or words used in the present specification and the claims shall not be interpreted to be limited as general or lexical meanings, and on the principle that the inventor can appropriately define a concept of a term for describing the invention by the best method, the terms or the words shall be interpreted as a meaning and a concept corresponding to the technical spirit of the present invention.

Further, when a part "includes" other constituent elements, this means that other constituent elements may be further included, rather than excluding other constituent elements, unless otherwise stated.

In addition, the terms "~ unit" and "~ device" described in the specification mean units for processing at least one function and operation. Hereinafter, exemplary embodiments of the present invention will be described with reference to the drawings. Further, throughout the specification, "A to B" means A or more and B or less, and means a numerical range including both A and B.

Hereinafter, an exemplary embodiment of the present invention will be described with reference to the drawings.

An exemplary embodiment of the present invention provides an electrode coating die including: a slurry discharge part 11 for discharging an active material slurry onto a current collector 30; and a dam liquid discharge part which is provided to at least one side of the slurry discharge part 11, and discharges a dam liquid so as to form a dam layer 32 covering at least a part of an inclined surface portion 33 provided on an edge portion of an active material slurry layer 31 coated by being discharged from the slurry discharge part 11.

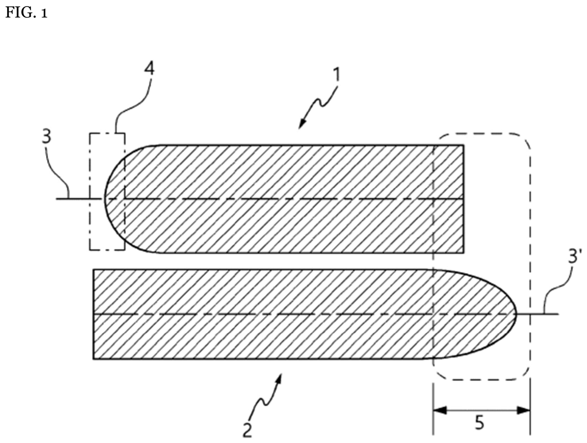

FIG. 1 is a diagram schematically illustrating a form in which a first electrode 1 and a second electrode 2 included in an electrode assembly face each other according to a comparative example of the present invention.

Referring to FIG. 1, the first electrode 1 may be a positive electrode or a negative electrode, and the second electrode 2 may have a polarity opposite to that of the first electrode, and for example, the second electrode may be a negative electrode. When the electrode assembly is formed, a sliding section 5 in which the mass of the active material of the active material layer of the negative electrode facing the active material layer of the positive electrode decreases may be formed, and accordingly, due to a decrease in the loading of the active material of the negative electrode, negative electrode lithium may be completely precipitated, which may cause safety problems.

The sliding section 5 means a section in which the mass of the active material applied to the distal end portion of the active material slurry layer 31 coated on the current collector 30 of the electrode is reduced, so that a thickness of the active material layer 40 is reduced compared to a non-inclined portion 42 of the active material layer, to form an inclined portion 41.

According to one example, the inclined portion 41 may be a portion having a height of 80% or less of the height of the highest point in the active material layer 40, and the non-inclined portion 42 is a portion having a height more than 80% of the height of the highest point in the active material layer 40, and may be a portion in the active material layer 40 in which the inclined portion 41 is not provided.

According to the exemplary embodiment of the present invention, the mass of the active material applied to the current collector 30 may be expressed as a loading amount, and may be expressed as an NP ratio value obtained by comparing the amounts of the positive electrode and the negative electrode loaded. The NP ratio value is a value representing the mass of the active material of the negative electrode to the mass of the active material of the positive electrode, and accordingly, the ratio of the amount of active material loaded of the positive electrode to the active material of the negative electrode may be known.

The NP ratio value may be 100% to 120%, and may be expressed by multiplying the mass of the active material of the negative electrode with respect to the mass of the active material of the positive electrode by 100%. When the NP ratio value is less than 100%, a sliding section in which the mass of the active material of the active material layer of the negative electrode facing the active material layer of the positive electrode decreases when the electrode assembly is formed may be formed, and due to the load reduction, negative electrode lithium is completely precipitated, and safety problems such as explosion may occur. When the NP ratio value is more than 120%, performance degradation may occur due to a kinetic balance problem due to charging and discharging of the negative electrode and the positive electrode. The kinetic balance problem may occur due to a difference in movement speed of lithium during charging and discharging of the positive electrode and the negative electrode, and for example, this may occur when the speed of lithium moving from the negative electrode to the positive electrode is slower than the speed of lithium moving from the positive electrode to the negative electrode.

According to an example, the NP ratio value may be 100% or more, 103% or more, or 105% or more. The NP ratio value may be 120% or less, 117% or less, 115% or less, 113% or less, or 112% or less. When the above range is satisfied, a sliding section due to a decrease in the loading of the active material layer of the negative electrode is reduced, thereby preventing a safety problem.

The dam liquid forms the dam layer 32 in the sliding section 5 of the active material slurry provided on the current collector 30 of the electrode so as to cover at least a portion of the inclined surface portion 33 provided on the edge portion of the active material slurry layer 31 coated on the current collector 30, to minimize the formation of the sliding section 5 of the electrode.

A dam liquid discharge part 12 for discharging the dam liquid may be provided on at least one side or on opposite sides of the slurry discharge part 11 for discharging the active material slurry from the electrode coating die. The dam liquid discharge part 12 is provided on at least one side of the slurry discharge part 11, so that the dam layer 32 may be formed on the inclined surface portion 33 provided on one side or both sides of the edge portion of the active material slurry layer 31 discharged from the slurry discharge part 11 and coated on the current collector 30. A portion in which the inclined surface portion 33 provided on the edge portion of the active material slurry coated on the current collector 30 is formed may be included in the sliding section 5.

By forming the dam layer 32 on the active material slurry layer 31, the mass of the active material of the active material layer of the negative electrode facing the active material layer of the positive electrode does not decrease, so that it is possible to solve safety problems that may occur because the ratio of the amount of active materials loaded of the positive electrode and the negative electrode in the corresponding region is changed in an undesirable direction.

The shape and size of the slurry discharge part 11 and the dam liquid discharge part 12 are not particularly limited as long as the slurry discharge part 11 and the dam liquid discharge part 12 discharge the dam liquid so as to form the dam layer 32 covering at least a portion of the inclined surface portion 33 provided at the edge portion of the active material slurry layer 31 which is discharged from the slurry discharge part and coated on the current collector 30.

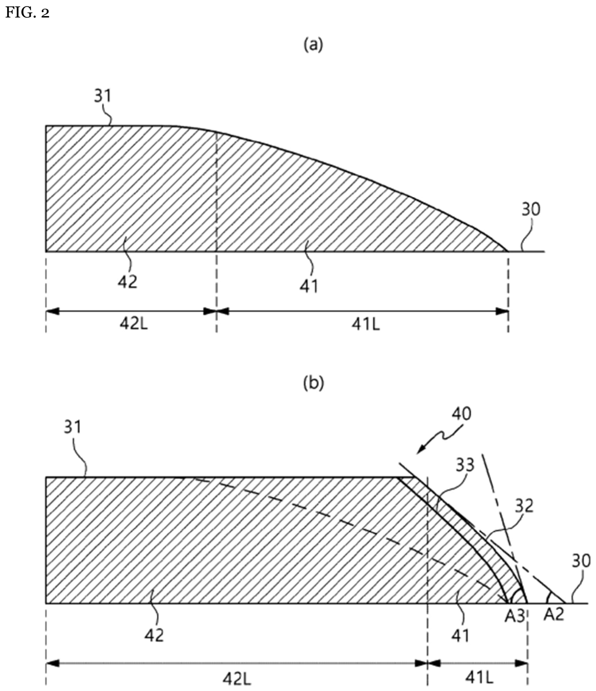

FIG. 2 is a diagram (a) illustrating a form of the inclined portion of the active material layer coated by an existing electrode coating die according to the comparative example of the present invention, and a diagram (b) illustrating a form of an inclined portion 41 of an active material layer 40 coated by an electrode coating die 100 according to an exemplary embodiment of the present invention.

Referring to FIG. 2, when the electrode is coated by the electrode coating die 100 according to the exemplary embodiment of the present invention, a dam is formed in the area in which the amount of active material loaded of the inclined portion is reduced, compared to the case in which the electrode is coated by the existing electrode coating die, thereby solving the problem due to the reduction in the amount of active material loaded.

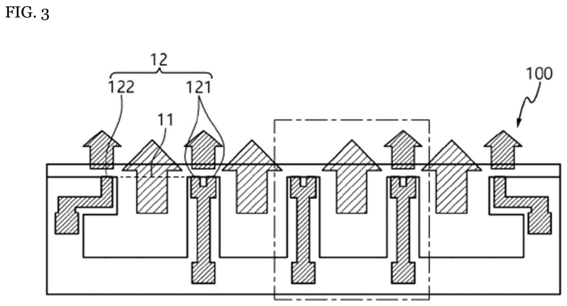

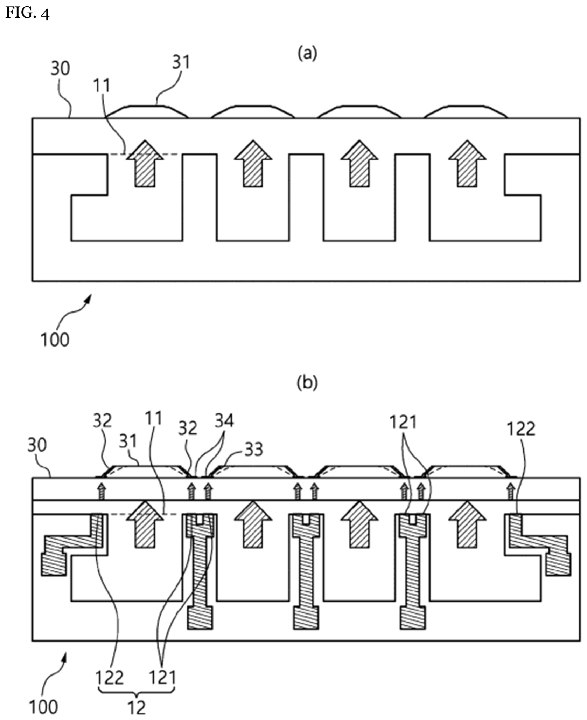

FIG. 3 is a diagram schematically illustrating an internal structure of the electrode coating die 100 according to the exemplary embodiment of the present invention, and FIG. 4 is a diagram (a) illustrating an active material slurry layer coated by the existing electrode coating die according to the comparative example of the present invention, and a diagram (b) separately illustrating the slurry layer 31 and the dam layer 32 coated by the electrode coating die according to the exemplary embodiment of the present invention.

Referring to FIGS. 3 to 4, when the electrode is coated on the existing electrode coating die according to the comparative example of the present invention, the sliding section in which the mass of the active material of the active material layer of the negative electrode facing the active material layer of the positive electrode decreases may be formed when an electrode assembly including the electrode is formed, and due to the load reduction, negative electrode lithium is completely precipitated, and safety problems, such as explosion, may occur.

When the electrode is coated on the electrode coating die 100 according to the exemplary embodiment of the present invention, the dam layer 32 is formed on the inclined surface portion 33 provided at the edge portion of the active material slurry layer 31 coated on the current collector 30, so that it is possible to prevent a decrease in the amount of active material slurry loaded of the electrode.

The electrode coating die 100 simultaneously discharges the active material slurry and the dam liquid to form the dam layer 32 covering at least a portion of the inclined surface portion 33 provided on the edge portion of the active material slurry layer 31 discharged from the slurry discharge part 11 and coated on the current collector 30. The dam layer 32 relieves the sliding section 5 of the electrode to prevent a decrease in the amount of active material slurry loaded of the electrode, thereby minimizing safety problems.

The inclined surface portion 33 means a surface portion formed by the inclined portion in a section forming the inclined portion 41 in which the thickness of the active material layer 40 is reduced compared to the central region of the active material layer 40. The inclined surface portion 33 may be a surface in which the inclined portion 41 is in contact with the dam layer 32.

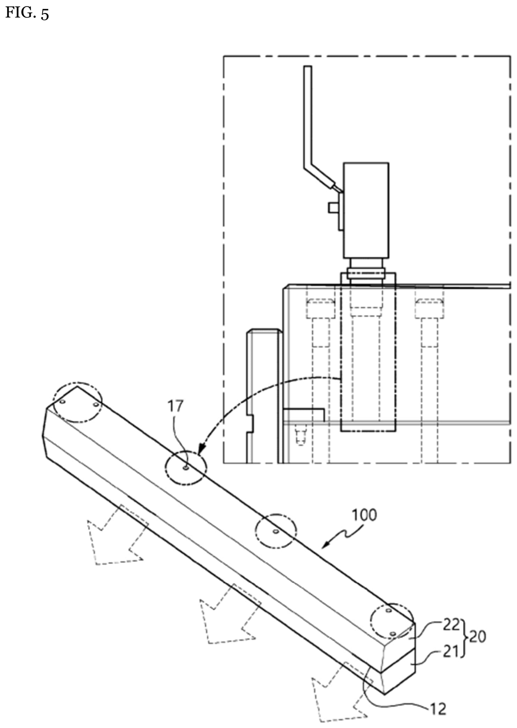

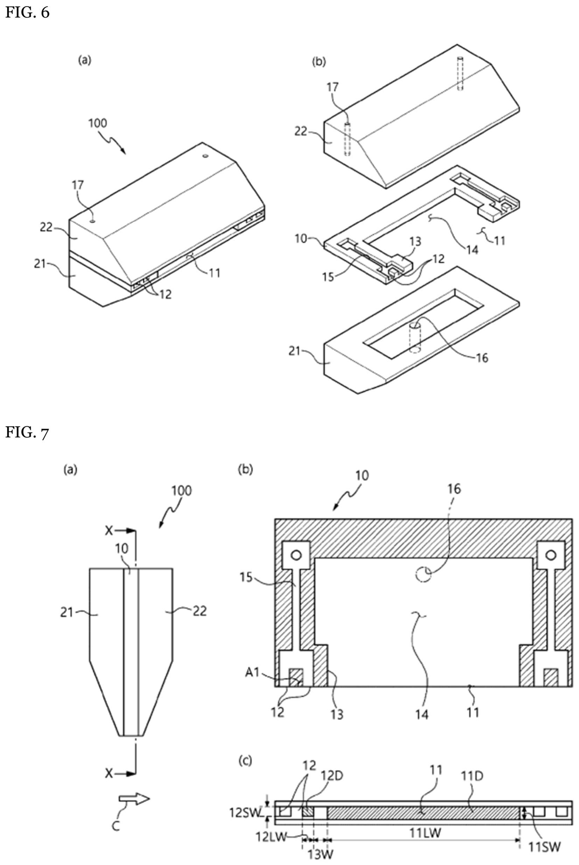

FIG. 5 is a diagram schematically illustrating the electrode coating die 100 according to the exemplary embodiment of the present invention, and FIG. 6 is an overall perspective view (a) and an exploded perspective view (b) of the electrode coating die 100 according to the exemplary embodiment of the present invention.

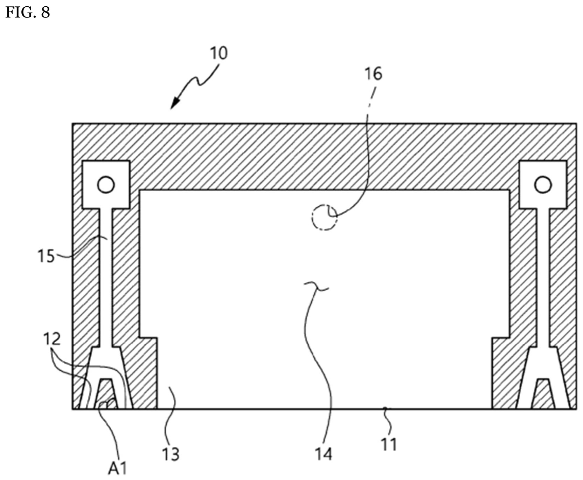

FIG. 7 is a diagram illustrating the electrode coating die 100 according to the exemplary embodiment of the present invention, and illustrates a dotted line portion of FIG. 3 as one unit, and (a) is a front view, (b) is a cross-sectional view taken along line A-A, and (c) is a bottom view, and FIG. 8 is a diagram illustrating an electrode coating die according to another exemplary embodiment of (b) of FIG. 7.

Referring to FIGS. 5 to 8, the electrode coating die includes: a shim 10 dividing the slurry discharge part 11 and the dam liquid discharge part 12; and a pair of support parts 20 disposed opposite to each other on opposite sides of the shim 10, and the shim 10 includes a slurry passage 14 for inducing the active material slurry to the slurry discharge part 11 and a dam liquid passage 15 for inducing the dam liquid to the dam liquid discharge part 12, and the pair of support parts 20 includes a first support part 21 disposed on the upstream side in a coating direction C of the active material slurry and a second support part 22 disposed on the downstream side in the coating direction C.

The upstream side in the coating direction C of the active material slurry means a direction in which the current collector is first coated and descends when the current collector of the electrode is continuously transferred and the active material slurry is coated on the current collector. The downstream side in the coating direction C of the active material slurry means a direction in which the current collector is later coated and descends when the current collector of the electrode is continuously transferred and the active material slurry is coated on the current collector.

The shim 10 may be fixed by a pair of support parts 20 disposed opposite to each other on both surfaces, and thus the slurry discharge part 11 and the dam liquid discharge part 12 may be provided in the thickness direction of the shim 10. The shim 10 includes a slurry passage 14 for inducing the injected active material slurry, and the slurry passage 14 extends to the slurry discharge part 11 to discharge the active material slurry. In addition, the shim includes the dam liquid passage 15 for inducing the injected dam liquid, and the dam liquid passage 15 extends to the dam liquid discharge part 12 to discharge the dam liquid simultaneously with the active material slurry.

The first support part 21 of the pair of support parts 20 is disposed on the upstream side of the coating direction C along the coating direction of the active material slurry, and the second support part 22 is disposed on the downstream side of the coating direction C to form the slurry discharge part 11 and the dam liquid discharge part 12.

Referring to FIGS. 5 to 8, the electrode coating die 100 according to the exemplary embodiment of the present invention includes the shim 10 and the pair of support parts 20 for fixing the shim 10 while facing opposite sides of the shim 10, thereby forming the slurry discharge part 11 and the dam liquid discharge part 12.

According to the exemplary embodiment, an area 11D of the opening of the slurry discharge part is wider than an area 12D of the opening of the dam liquid discharge part, and a width 11LW perpendicular to the coating direction of the active material slurry of the slurry discharge part is larger than a width 12LW of the dam liquid discharge part.

The opening areas 11D and 12D of the slurry discharge part and the dam liquid discharge part mean the cross-sectional areas of the slurry discharge part 11 and the dam liquid discharge part 12 in the thickness direction of the shim 10, and the widths 11LW and 12LW of the slurry discharge part and the dam liquid discharge part mean the lengths of the slurry discharge part 11 and the dam liquid discharge part 12 perpendicular to the coating direction of the active material slurry.

The width 11LW of the slurry discharge part is set to be wider than the width 12LW of the dam liquid discharge part. The width 11LW of the slurry discharge part may be 50 mm to 150 mm, 60 mm to 130 mm, and preferably 70 mm to 110 mm. According to the example, the width 11LW of the slurry discharge part may be 50 mm or more, 55 mm or more, 60 mm or more, 65 mm or more, or 70 mm or more. The width 11LW of the slurry discharge part may be 150 mm or less, 140 mm or less, 130 mm or less, 120 mm or less, 110 mm or less, or 100 mm or less.

The width 12LW of the dam liquid discharge part may be 1 mm to 5 mm, 1 mm to 4.5 mm, 1 mm to 4 mm, 1 mm to 3.5 mm, or 1 mm to 3 mm. According to the example, the width 12LW of the dam liquid discharge part may be 1 mm or more and 1.5 mm or more. The width 12LW of the dam liquid discharge part may be 5 mm or less, 4.5 mm or less, 4 mm or less, 3.5 mm or less, 3 mm or less, or 2.5 mm or less. When the above range is satisfied, a sliding section due to the decrease in the loading of the active material layer of the negative electrode is reduced, thereby preventing a safety problem.

According to the exemplary embodiment, a partition wall 13 is provided between the slurry discharge part 11 and the dam liquid discharge part 12, and the partition wall 13 is provided to form the dam layer 32 covering at least a portion of the inclined surface portion 33 provided in the edge portion of the active material slurry layer 31.

According to the exemplary embodiment, the partition wall 13 has a width perpendicular to the coating direction C of the active material slurry, and the width is less than 3% or less of the sum of the widths of the slurry discharge part 11 and the dam liquid discharge part 12. When the width is maintained, it is advantageous to form the dam layer 32 covering the inclined surface portion 33 provided at the edge portion of the active material slurry layer 31.

Referring to FIG. 7, the partition wall 13 may be provided to the shim 10. The partition wall 13 makes the width of the shim 10 perpendicular to the coating direction of the active material slurry have a predetermined gap between the slurry discharge part 11 and the dam liquid discharge part 12 to form the dam layer 32 covering at least a portion of the inclined surface portion 33 of the active material slurry layer 31 formed while the active material slurry discharged on the current collector 30 spreads in the direction perpendicular to the coating direction C.

Specifically, the width 13W of the partition wall may be 0.5 mm to 5 mm, 1 mm to 4.5 mm, 1.5 mm to 4.0 mm, or 2 mm to 3.5 mm. According to the example, the width 13W of the partition wall may be 0.5 mm or more, 1 mm or more, 1.5 mm or more, or 2 mm or more. The width 13W of the partition wall may be 5 mm or less, 4.5 mm or less, 4 mm or less, or 3.5 mm or less. The width 13W of the partition wall may be 3% or less, 2.5% or less, or 2% or less of the sum of the width 11LW of the slurry discharge part and the width 12LW of the dam liquid discharge part. It may be set to form the dam layer 32 covering the inclined surface portion 33 provided at the edge portion of the active material slurry layer 31 by maintaining the width.

According to the exemplary embodiment, an inclination angle A1 formed between the dam liquid passage 15 and the direction of the width 12LW of the dam liquid discharge part is 90° or less. According to the example, the inclination angle A1 between the dam liquid passage 15 and the direction of the width 12LW of the dam liquid discharge part may be 80° or less, 75° or less, 70° or less, 65° or less, or 60° or less. The inclination angle A1 formed by the dam liquid passage 15 in the direction of the width 12LW of the dam liquid discharge part may be 30° or more, 35° or more, 40° or more, 45° or more, or 50° or more. When the inclination angle A1 is maintained, it is advantageous to form the dam covering the inclined surface portion A1 provided at the edge portion of the active material slurry.

Referring to (b) of FIG. 7 to FIG. 8, the inclination angle A1 formed by the dam liquid passage 15 of the electrode coating die according to the exemplary embodiment of the present invention and the direction of the width 12LW of the dam liquid discharge part may be 90° or less.

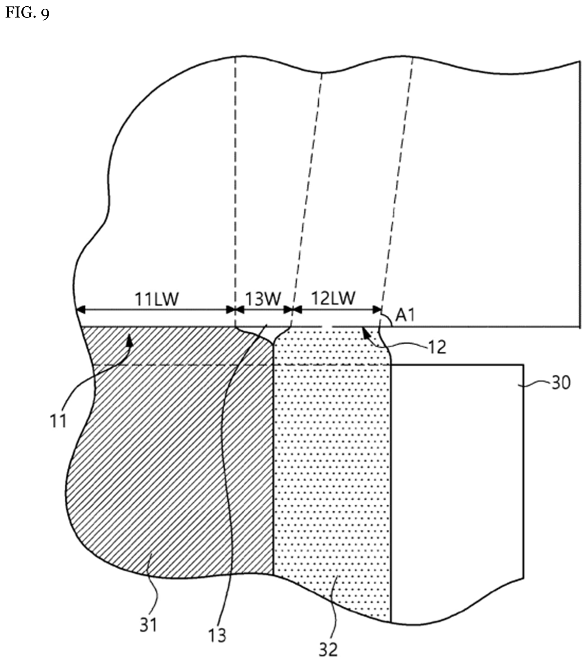

FIG. 9 is a diagram illustrating a state where the active material slurry and the dam liquid discharged from the electrode coating die 100 according to the exemplary embodiment of the present invention is applied on a current collector.

Referring to FIG. 9, the active material slurry and the dam liquid discharged from the electrode coating die 100 according to the exemplary embodiment of the present invention may be applied on the current collector 30 in the coating direction C of the active material slurry, and form the dam layer 32 covering at least a portion of the inclined surface portion 33 provided at the edge portion of the active material slurry layer 31 formed while spreading in the direction perpendicular to the coating direction C.

Referring to FIGS. 7 and 9, in a cross-sectional view of the shim 10 by which the slurry discharge part 11 and the dam liquid discharge part 12 are partitioned, the dam liquid passage 15 provided in the shim to discharge the dam liquid may form the inclination angle A1 with the direction of the width 12LWD of the dam liquid discharge part.

The direction of the width 12LWD of the dam liquid discharge part means a direction perpendicular to the coating direction C of the active material slurry. The coating direction C of the active material slurry is a direction horizontal to the direction in which the active material layer 40 is coated on the current collector 30 by discharging the active material slurry from the electrode coating die 100.

The dam liquid passage 15 is not particularly limited in shape and shape as long as the dam liquid passage is connected to the dam liquid discharge part, and may be a straight line or a curved line.

The inclination angle A1 between the dam liquid passage 15 and the direction of the width 12LW of the dam liquid discharge part means the inclination angle A1 formed between the dam liquid passage 15 and the direction of the width 12LW of the dam liquid discharge part at a point where the dam liquid passage 15 meets the dam liquid discharge part 12. By adjusting the inclination angle A1, the inclination angle of the dam liquid discharge part 12 is adjusted, which is advantageous in forming the dam layer 32.

According to the exemplary embodiment, the dam liquid is the active material slurry. The dam liquid may be the same component as the active material slurry, and there may be a difference in composition. When the dam liquid is the active material slurry, the dam layer 32 covering at least a portion of the inclined surface portion 33 provided at the edge portion of the active material slurry layer 31 is formed to minimize the forming of the negative electrode sliding section 5 of the electrode, and since the mass of the active material of the electrode does not decrease, the ratio of the amount of active materials loaded of the positive electrode and the negative electrode in the corresponding region may be preferably maintained.

According to the exemplary embodiment, a height 12SW of the dam liquid discharge part in the coating direction C of the active material slurry is equal to or smaller than a height 11SW of the slurry discharge part.

According to the exemplary embodiment, the dam liquid discharge part 12 is provided on a straight line compared to the position of the slurry discharge part 11 or is provided to be biased to the downstream side in the coating direction C of the active material slurry, and the height 12SW of the dam liquid discharge part is smaller than the height 11SW of the slurry discharge part, and the position of the dam liquid discharge part 12 is biased to the downstream side in the coating direction C of the active material slurry compared to the position of the slurry discharge part 11.

Referring to (c) of FIG. 7, the height 12SW of the dam liquid discharge part in the coating direction C of the active material slurry may be the equal to or smaller than the height 11SW of the slurry discharge part. When the height 12SW of the dam liquid discharge part is the same as the height 11SW of the slurry discharge part, the dam liquid discharge part 12 is provided on a straight line compared to the position of the slurry discharging part 11 or may be provided to be biased to the downstream side of the coating direction C of the active material slurry. When the height 12SW of the dam liquid discharge part is smaller than the height 11SW of the slurry discharge part, the dam liquid discharge part 12 may be provided to be biased to the downstream side of the coating direction C of the active material slurry than the position of the slurry discharge part 11.

When the position of the dam liquid discharge part 12 is provided to be biased to the downstream side of the coating direction C of the active material slurry, it is advantageous to form the dam covering the inclined surface portion 33 provided at the edge portion of the active material slurry.

According to the exemplary embodiment, the dam liquid discharge part 12 is provided on opposite sides of the slurry discharge part 11. When the dam liquid discharge part 12 is provided on opposite sides of the slurry discharge part 11, the dam layer 32 is formed on each of the inclined surface portions 33 provided on the edge portions of both sides of the active material slurry layer 31.

Referring to FIG. 3 and (b) of FIG. 4, the number of slurry discharge parts 11 is two or more, and the dam liquid discharge parts 12 are provided on opposite sides of the slurry discharge part 11, and the dam liquid discharge part 12 includes a first dam liquid discharge part 121 that is connected from the dam liquid passage 15 between two adjacent slurry discharge parts 11 and is divided into two discharge parts, and a second dam liquid discharge part 122 that is connected from the dam liquid passage 15 at the outermost side of the plurality of slurry discharge parts and provided as a single discharge part.

The slurry discharge part 11 may be plural or singular. For example, the number of slurry discharge parts 11 may be one or more, two or more, three or more, four or more, five or more. The number of slurry discharge parts 11 may be 10 or less and 9 or less. According to the exemplary embodiment of the present invention, the number of slurry discharge pats 11 may be 7 to 9. The slurry discharge part 11 may be set in various ways according to the electrode coating process, but is not limited to the above range.

The dam liquid discharge part 12 may be provided on opposite sides of the slurry discharge part 11, and may include a first dam liquid discharge part 121 and a second dam liquid discharge part 122.

The first dam liquid discharge part 121 includes two discharge parts 121 through which the dam liquid injected into a dam liquid injector 17 of the electrode coating die 100 extends to the dam liquid passage 15 and is discharged, and the two discharge parts are provided between the two adjacent slurry discharge parts 11 to form the dam layer 32 on the different active material layer 40 formed adjacent to each other.

When the number of slurry discharge parts 11 is n, the number of first dam liquid discharge parts 121 is 2(n-1), and n is an integer of 1 to 10. For example, depending on the number of slurry discharge parts 11, the number of first dam liquid discharge parts 121 may be 0 to 18, 2 to 16, 4 to 14, 6 to 12, or 12 to 16. According to the exemplary embodiment of the present invention, the number of first dam liquid discharge parts 121 may be 7 to 9.

Since the second dam liquid discharge part 122 includes one discharge part 122 to face the active material layer 40 at the outermost side of the slurry discharge part 11, the number of second dam liquid discharge parts 122 may be two.

According to the exemplary embodiment, the two discharge parts included in the adjacent first dam liquid discharge part 121 are provided to be spaced apart from each other so as to form an uncoated region 34 in which the active material layer 40 is not provided on the current collector.

The two discharge parts included in the adjacent first dam liquid discharge part 121 may be provided between the two adjacent slurry discharge parts 11, and the dam layer 32 may be formed on the different active material layers 40 formed adjacent to each other. The different active material layers 40 formed adjacent to each other on one current collector 30 may form the uncoated region 34 on which the active material slurry is not coated therebetween, and the uncoated region 34 is advantageous for forming a tab electrically connected to an electrode terminal when an electrode assembly of an electrode including the same is formed.

Referring to FIG. 3 to (b) of FIG. 4, the slurry discharge part 11 may be plural, and the dam liquid discharge part 12 may be provided on opposite sides of the slurry discharge part 11. The first dam liquid discharge part 121 may be provided by being divided into two discharge parts between two adjacent slurry discharge parts 11, and may be connected from the dam liquid passage 15. The second dam liquid discharge part 122 may be provided as a single discharge part at the outermost side of the plurality of slurry discharge parts 11, and may be connected from the dam liquid passage 15.

The active material layer 40 may be formed along the direction C in which the active material slurry is coated by discharging the active material slurry onto the current collector 30 from the plurality of slurry discharge parts 11, and the dam liquid is discharged from the first dam liquid discharge part 121 provided between the plurality of slurry discharge parts 11 to form the dam layer 32 on the inclined surface portion provided at the edge portion of each of the different adjacent active material layers 40, and the dam layer 32 may be formed on the inclined surface portion 33 provided at the edge portions of the active material layers formed on both outermost sides of the current collector 30 by discharging the dam liquid from the second dam liquid discharge parts 122 provided on the both outermost sides of the plurality of slurry discharge parts 11.

The electrode coating which is capable of forming the plurality of active material layers 40 in one current collector 30 may be possible through the plurality of slurry discharge parts 11, the first dam liquid discharge part 121, and the second dam liquid discharge part 122, and it is possible to more economically control the amount of active material loaded of the electrode included in the electrode assembly. Accordingly, it is possible to solve the problem of safety so that the current applied to the battery may be stably increased, the size of the battery may be increased, and it is also possible to realize high energy density and reduce costs.

According to the exemplary embodiment, the second support part 22 further includes the dam liquid injector 17 for injecting the dam liquid into the dam liquid passage 15, and the first support part 21 further includes a slurry injector 16 for injecting the active material slurry into the slurry passage 14.

According to FIGS. 5 to 7, the dam liquid injector 17 may be connected to the dam liquid passage 15 and the dam liquid discharge part 12 to discharge the injected dam liquid. The slurry injector 16 may be connected to the slurry passage 14 and the slurry discharge part 11 to discharge the injected active material slurry.

Another exemplary embodiment of the present invention provides an electrode coating device 200 including a conveyor 210 for continuously transferring the current collector 30 of the electrode and the electrode coating die 100 for applying the active material layer 40 to the current collector 30 according to the above-described exemplary embodiment.

The conveyor 210 may include a roller for continuously transferring the current collector 30 of the electrode, the roller rotates in the coating direction C of the active material slurry to be coated on the current collector 30 to continuously transfer the current collector 30, and the speed of the roller may be adjusted in order to form the active material layer 40 and the dam layer 32 on the current collector 30.

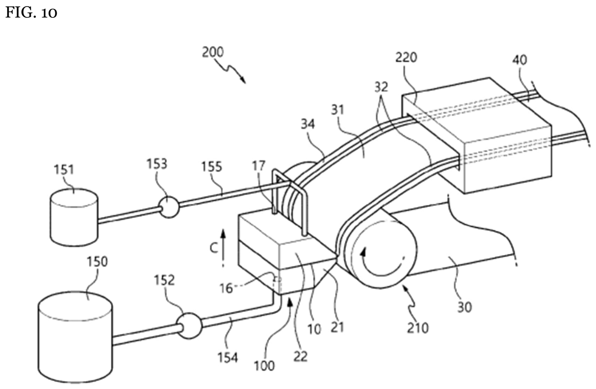

FIG. 10 is a diagram illustrating a state where the active material layer 40 is formed on the current collector 30 by using the electrode coating apparatus 200 according to the exemplary embodiment of the present invention.

Referring to FIG. 10, the conveyor 210 continuously transfers the current collector 30 of the electrode, and discharges the active material slurry and the dam liquid discharged from the electrode coating die 100 according to the exemplary embodiment to the transferred current collector 30 to form the active material layer 40. The electrode coating capable of forming the active material layer 40 on the current collector 30 may be performed multiple times at the same time by the plurality of slurry discharge parts 11 and dam liquid discharge parts 12. Accordingly, it is possible to more economically adjust the amount of active material loaded of the electrode included in the electrode assembly.

Another exemplary embodiment of the present invention provides an electrode manufacturing method including: preparing an active material slurry including an active material, a conductive material, and a solvent; and applying the active material slurry on a current collector 30, and applying the active material slurry includes discharging the active material slurry to the current collector 30 and discharging a dam liquid so as to form a dam layer 32 covering at least a portion of an inclined surface portion 33 provided on an edge portion of at least one side of an active material slurry layer 31 coated on the current collector at the same time to form an active material layer 40.

The coating operation is not particularly limited as long as the coating operation includes discharging the active material slurry to the current collector 30 and discharging the dam liquid so as to form a dam layer 32 covering at least the portion of the inclined surface portion 33 provided on the edge portion of at least one side of the active material slurry layer 31 coated on the current collector at the same time to form the active material layer 40.

According to the exemplary embodiment, in the electrode manufacturing method including the preparing the active material slurry including the active material, the conductive material, and the solvent; and applying the active material slurry on the current collector, in the coating operation, the active material slurry is discharged to the current collector 30 and the dam liquid is discharged so as to form the dam layer 32 covering at least the portion of the inclined surface portion 33 provided on the edge portion of at least one side of the active material slurry layer 31 coated on the current collector 30 at the same time by using the electrode coating die 100 according to the foregoing exemplary embodiment to form the active material layer 40.

Referring to FIG. 10, the coating operation of applying the active material slurry prepared in the preparation operation of the active material slurry and the dam liquid to the current collector 30 may include an operation of simultaneously discharging the active material slurry and the dam liquid so as to form the dam layer 32 covering at least the portion of the inclined surface portion 33 provided on the edge portion of at least one side of the active material slurry layer 31 to form the active material layer 40, and the operation may include an operation of forming the active material layer 40 from the electrode coating die 100 according to the foregoing exemplary embodiment.

According to the coating operation, it is possible to relieve the sliding section 5 of the active material slurry of the electrode by forming a dam in the sliding section 5 of the active material slurry coated by the existing coating method, thereby preventing the decrease in the amount of active material loaded of the electrode and solving the stability problems.

According to the exemplary embodiment, the dam liquid may have the same viscosity as that of the active material slurry. Otherwise, the dam liquid may have lower viscosity or higher viscosity than that of the active material slurry.

The dam liquid may be the active material slurry, and may have the same component as the active material slurry or may have a different composition from the active material slurry. The dam liquid may have the same viscosity, low viscosity, or high viscosity compared to the active material slurry. The viscosity range of the dam liquid may be adjusted to be advantageous in forming the dam covering the inclined surface portion 33 provided at the edge portion of the active material slurry, and may be adjusted according to the electrode coating process.

According to the exemplary embodiment, the electrode manufacturing method includes a drying operation of drying the active material layer 40 after the coating operation, or may further include a slitting operation of cutting the electrode manufactured by the electrode manufacturing method in a coating direction C of the active material slurry.

The drying operation may be an operation of drying the active material layer 40 after the coating operation, the coating operation of coating the active material layer 40 on the opposite surface of the current collector 30 after the drying operation, and the drying operation may proceed further.

The electrode manufacturing method may further include the slitting operation of cutting the electrode manufactured by the electrode manufacturing method in the coating direction C of the active material slurry.

The slitting operation may include an operation of cutting the electrode to have an uncoated region 34 on the edge portion of the plurality of active material layers 40 formed on one current collector 30 in the electrode.

In addition, the electrode manufacturing method may include cutting the electrode in the coating direction C of the active material slurry in the active material layer 40 provided on the electrode, and by the cutting, the active material layer 40 in which the dam layer 32 covering at least a portion of the inclined surface portion 33 of the active material slurry layer 31 is formed only on one side of the electrode may be provided. Accordingly, it is possible to economically solve the problem of safety of the battery according to the mass of the active material, and it is possible to stably increase the current applied to the battery, thereby increasing the size of the battery.

The slitting operation may be performed in the coating direction C of the active material slurry, that is, in the longitudinal direction of the current collector, at a middle point in the width direction of the current collector 30 constituting the active material layer 40. The cut point may be the middle point or another point of the portion where the active material layer 40 is formed in the width direction of the current collector.

In addition, according to the use of the electrode assembly, it is possible to further cut the electrode in a direction perpendicular to the coating direction C, that is, in the width direction of the current collector.

Another exemplary embodiment of the present invention provides an electrode including a current collector 30 and an active material layer 40 provided on the current collector, and the active material layer 40 includes an inclined portion 41 having a height of 80% or less of a height of the highest point and a non-inclined portion 42 having a height of more than 80% of the height of the highest point, and the length from a boundary between the non-inclined portion 42 and the inclined portion 41 to the distal end of the inclined portion 41 is 40% or less of the total lengths of the non-inclined portion 42 and the inclined portion 41.

The inclined portion 41 is a portion in which the thickness decreases at the edge portion of the active material layer 40 coated on the current collector 30, and means the portion with the height of 80% or less of the height of the highest point in the thickness of the active material layer 40. The non-inclined portion 42 means a portion having a height of more than 80% of the height of the highest point in the thickness of the active material layer 40.

The inclined portion 41 means a portion inclined at the edge portion of the active material layer, and the non-inclined portion 42 means a central portion provided between the inclined portions of the active material layer. Even if the inclined structure is included in at least a part of the non-inclined portion 42, in the present specification, the inclined portion 41 and the non-inclined portion 42 are separately described based on 80% of the height of the highest point in the thickness of the active material layer 40.

The active material layer 40 includes the non-inclined portion 42 in which the inclined portion 41 is not provided, and the length from the boundary between the non-inclined portion 42 and the inclined portion 41 to the distal end of the inclined portion 41 is a length 41L of the inclined portion, means a length corresponding to a portion in which the thickness decreases at the edge portion of the active material layer 40, and may be included in the sliding section 5 of the electrode.

The total length of the active material layer 40 is the length of the active material layer perpendicular to the coating direction C of the active material slurry, and means the sum of the length of the non-inclined portion 42L and the length of the inclined portion 41L.

According to the exemplary embodiment, compared to the total length of the active material layer, the length 41L from the boundary between the non-inclined portion and the inclined portion to the distal end of the inclined portion may be 40% or less, 35% or less, or 30% or less. Compared to the total length of the active material layer, the length 41L from the boundary between the non-inclined portion and the inclined portion to the distal end of the inclined portion may be 15% or more, 20% or more, or 25% or more.

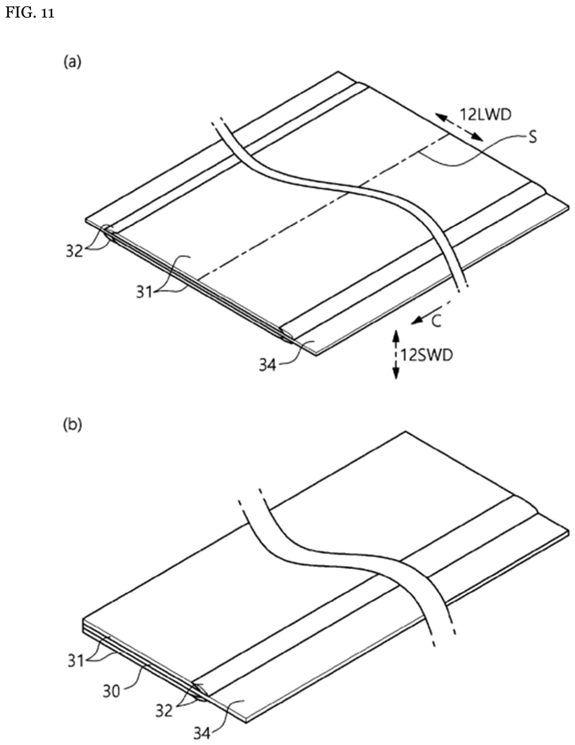

FIG. 11 is a diagram illustrating the electrode according to the exemplary embodiment of the present invention, and (a) is an overall perspective view and (b) is a perspective view of a cut electrode. Referring to FIG. 11, the electrode includes the current collector 30 and the active material layer 40 provided on the current collector, and the active material layer includes the inclined portion 41 and the non-inclined portion 42, and for example, in the electrode according to the exemplary embodiment, the length 41L from the boundary between the non-inclined portion and the inclined portion to the distal end of the inclined portion may be 40% or less of the total length.

The electrode may be an electrode manufactured through the process of performing the coating operation and/or the drying operation by using the slurry prepared by the active material slurry preparing operation. The electrode may be cut in the coating direction C of the active material slurry by the slitting operation. Accordingly, it is possible to more economically manufacture the electrode that controls the amount of active material loaded of the electrode included in the electrode assembly.

According to the exemplary embodiment, in the electrode including the current collector 30 and the active material layer 40 provided on the current collector, the active material layer 40 includes the inclined portion 41 having the height of 80% or less of the height of the highest point and the non-inclined portion 42 having the height of more than 80% of the height of the highest point, and an inclination angle A2 formed by a tangent line with the current collector at the boundary between the non-inclined portion and the inclined portion is 25° or more.

Referring to (b) of FIG. 2, the inclination angle A2 between the tangent line to the current collector at the boundary of the non-inclined portion and the inclined portion is the portion where the thickness starts to decrease at the edge portion of the active material layer 40, and preferably, it means an angle formed by a tangent line with the current collector 30 in the portion having the height of 80% of the height of the highest point of the active material layer 40.

In the active material layer 40 including the dam layer 32 covering at least a portion of the inclined surface portion 33 provided at the edge portion of the active material slurry layer 31 coated on the current collector, the amount of the active material coated on the electrode is controlled by the dam layer 32, so that the angle A2 formed with the current collector at the portion where the inclined portion 41 starts from the non-inclined portion 42 may be larger than that of the existing active material slurry layer.

The angle may mean an inclination formed by a tangent line with the current collector 30 at the portion where the inclined portion 41 starts from the non-inclined portion 42, and the inclination refers to an inclination of a tangent line that is in contact with the active material layer 40 at a portion where the inclined portion 41 starts from the non-inclined portion 42. The inclination at the boundary between the non-inclined portion 42 and the inclined portion 41 may be greater in the electrode according to the present embodiment than in the existing electrode.

The inclination angle A2 formed by the tangent line with the current collector at the boundary between the non-inclined portion and the inclined portion may be 25° or more, or 30° or more. The inclination angle A2 formed by the tangent line with the current collector at the boundary between the non-inclined portion and the inclined portion may be 80° or less, 75° or less, 70° or less, or 65° or less. When the above range is satisfied, the mass of the active material of the active material layer of the second electrode 2 facing the active material layer of the first electrode 1 does not decrease, so that it is possible to solve the safety problems that may occur due to the change in the ratio of the amount of active materials loaded of the positive and negative electrodes in an undesirable direction.

Referring to (b) of FIG. 2, in the electrode including the current collector 30 and the active material layer 40 provided on the current collector 30, the active material layer 40 includes the inclined portion 41 having the height f 80% or less of the height of the highest point and the non-inclined portion 42 having the height of more than 80% of the height of the highest point, and an inclination angle A3 formed by a tangent line with the current collector 30 at the distal end of the inclined portion 41 is 25° or more.

According to the exemplary embodiment, the inclination angle A3 formed by the tangent line with the current collector at the distal end of the inclined portion may be 25° or more, 30° or more, 35° or more, 40° or more, or 45° or more. The inclination angle A3 formed by the tangent line with the current collector at the distal end of the inclined portion may be 90° or less, 85° or less, or 80° or less.

The distal end of the inclined portion 41 may mean a portion at which the sliding section 5 of the electrode ends, and the electrode according to the exemplary embodiment of the present invention includes the active material layer 40 by forming the dam, so that the amount of active material slurry loaded is large, so that the inclination angle A3 at the point of the distal end of the inclined portion may be formed to be greater than the inclination angle of the existing electrode.

The inclination angle A3 may mean an inclination formed by a tangent line with the current collector 30 at the distal end of the inclined portion 41, and the inclination means an inclination of a tangent line that is in contact with the active material layer 40 at the distal end of the inclined portion 41. The inclination formed with the current collector 30 at the distal end of the inclined portion 41 may be greater in the electrode according to the present exemplary embodiment than in the existing electrode.

Therefore, the mass of the active material of the active material layer of the second electrode (2) facing the active material layer of the first electrode (1) does not decrease, so that it is possible to solve the safety problems that may occur due to the change in the ratio of the amount of active materials loaded of the positive electrode and the negative electrode in an undesirable direction.

According to the exemplary embodiment, in the electrode including the current collector 30 and the active material layer 40 provided on the current collector 30, the active material layer 40 includes the inclined portion 41 having the height of 80% or less of the height of the highest point and the non-inclined portion 42 having the height of more than 80% of the height of the highest point, and the inclination formed by the straight line connecting the boundary point between the non-inclined portion 42 and the inclined portion 41 and the distal end point of the inclined portion 41 by the shortest distance with the current collector 30 is 0.8 or more.

According to the exemplary embodiment, the inclination formed by the straight line connecting the boundary point between the non-inclined portion 42 and the inclined portion 41 and the distal end point of the inclined portion 41 by the shortest distance with the current collector 30 may be 0.8 or more, 1 or more, 1.5 or more, 2 or more, 2.5 or more, 3 or more, 3.5 or more, 4 or more, 4.5 or more, 5 or more, or 5.5 or more. The inclination formed by the straight line connecting the boundary point between the non-inclined portion 42 and the inclined portion 41 and the distal end point of the inclined portion 41 by the shortest distance with the current collector 30 may be 10 or less, 9.5 or less, 9 or less, 8.5 or less, 8 or less, 7.5 or less, 7 or less, 6.5 or less, or 6 or less. When the above range is satisfied, the mass of the active material of the active material layer of the second electrode 2 facing the active material layer of the first electrode 1 does not decrease, so that it is possible to solve the safety problems that may occur due to the change in the ratio of the amount of active materials loaded of the positive electrode and the negative electrode in an undesirable direction.

The distal end of the inclined portion 41 from the boundary point between the non-inclined portion 42 and the inclined portion 41 is reduced in thickness at the edge portion of the active material layer 40 to be included in the sliding section 5 constituting the inclined portion 41. Since the electrode including the active material layer 40 forms the dam so that the amount of active material slurry loaded increases compared to the existing electrode, the inclination forming the inclined portion 41 of the active material layer 40 may be greater than the inclination of the existing electrode.

The inclination may be an inclination formed by the straight line connecting the boundary point between the non-inclined portion 42 and the inclined portion 41 and the distal end point of the inclined portion 41 by the shortest distance and the current collector 30.

The inclination may be measured as a height H of the active material layer compared to a length I from the point perpendicular to the boundary point of the non-inclined portion and the inclined portion in the current collector 30 to the distal end of the inclined portion, and may satisfy Equation 2 below. In the current collector 30, the length I from the point perpendicular to the boundary point between the non-inclined portion and the inclined portion to the distal end of the inclined portion may be the length 41L of the inclined portion.

According to the example, the inclination from the boundary point between the non-inclined portion 42 and the inclined portion 41 to the distal end of the inclined portion 41 may satisfy Equation 2 below.

[Equation 2]

$$H / I \geq 0.8$$

In Equation 2, H may be the height of the active material layer 40, and I may be the length from the point perpendicular to the boundary point of the non-inclined portion and the inclined portion to the distal end of the inclined portion in the current collector 30.

Since the electrode including the active material layer 40 forms the dam so that the amount of active material slurry loaded increases compared to the existing electrode, the inclination forming the inclined portion of the active material layer 40 may be greater than that of the existing electrode.

When the above range is satisfied, the mass of the active material of the active material layer of the second electrode 2 facing the active material layer of the first electrode 1 does not decrease, so that it is possible to solve the safety problems that may occur due to the change in the ratio of the amount of active materials loaded of the positive electrode and the negative electrode in an undesirable direction.

According to the exemplary embodiment, in the electrode including the current collector 30 and the active material layer 40 provided on the current collector 30, the active material layer 40 includes the active material slurry layer 31 coated on the current collector 30 and the dam layer 32 covering at least a portion of the inclined surface portion 33 provided at the edge portion of the active material slurry layer, and the dam layer 32 is provided to cover 1% or more and 20% or less of the entire surface of the active material slurry layer 31.

The inclined surface portion 33 means a surface portion formed by the inclined portion in a section forming the inclined portion 41 in which the thickness of the active material layer 40 is reduced compared to the central region of the active material layer 40. The inclined surface portion 33 may be a surface in which the inclined portion 41 is in contact with the dam layer 32.

According to the exemplary embodiment, the area covered by the dam layer 32 among the entire surface of the active material slurry layer 31 may be 1% or more, 3% or more, 5% or more, or 8% or more. The area covered by the dam layer among the entire surface of the active material slurry layer may be 20% or less, 18% or less, 15% or less, or 12% or less.

When the above range is satisfied, the amount of active material slurry loaded is increased to form the active material layer 40 including the dam layer 32 on the active material slurry layer 31, and the mass of the active material of the active material layer 40 of the electrode does not decrease, thereby being advantageous to solve the safety problem.

According to the exemplary embodiment, in the electrode including the current collector 30 and the active material layer 40 provided on the current collector 30, the active material layer 40 is provided by the electrode manufacturing method according to the above-described exemplary embodiment.

Referring to (b) of FIG. 2, when the electrode is manufactured according to the exemplary embodiment of the present invention, the dam is formed in the region in which the amount of active material loaded is reduced according to the sliding section 5 of the active material slurry generated at the edge portion of the electrode compared to the existing electrode, thereby solving the problem due to the decrease in the amount of active material loaded.

According to the exemplary embodiment, the edge portion of the current collector 30 includes the uncoated region 34 in which the active material layer 40 is not provided, and the inclined portion 41 is formed in the boundary region between the active material layer 40 and the uncoated region 34.

The inclined portion 41 may be formed at the distal end portion to which the active material layer 40 is applied, and thus may be formed in a boundary region of the uncoated region 34.

Another exemplary embodiment of the present invention provides an electrode assembly in which a first electrode, a separation membrane, and a second electrode are stacked and wound, in which at least one of the first electrode and the second electrode is the electrode according to the foregoing exemplary embodiment.

According to the exemplary embodiment, in the electrode assembly, the first electrode is a positive electrode, the second electrode is a negative electrode, and the mass ratio of the active material layers of the first electrode and the second electrode satisfies Equation 1 below.

[Equation 1]

$$100(\%) \leq X2/X1 \leq 120\%$$

In Equation 1, X1 is the mass of the active material layer 40 in the first electrode, and X2 is the mass of the active material layer 40 in the first electrode.

The mass ratio of the active material layer 40 may be 100% to 120%, and may be expressed by multiplying the mass of the active material of the second electrode 2 with respect to the mass of the active material of the first electrode 1 by 100%. When the mass ratio of the active material layer 40 is less than 100%, the sliding section 5 in which the mass of the active material of the active material layer of the second electrode 2 facing the active material layer of the first electrode 1 decreases when the electrode assembly is formed may be formed, and due to the load reduction according to the forming of the sliding section 5, negative electrode lithium is completely precipitated and safety problems, such as explosion, may occur. When the mass ratio of the active material layer 40 is more than 120%, performance degradation may occur due to a kinetic balance problem due to charging and discharging of the negative electrode and the positive electrode. The kinetic balance problem may occur due to a difference in movement speed of lithium during charging and discharging of the positive electrode and the negative electrode, and for example, this may occur when the speed of lithium moving from the negative electrode to the positive electrode is slower than the speed of lithium moving from the positive electrode to the negative electrode.

According to an example, the mass ratio of the active material layer 40 may be 100% or more, 103% or more, or 105% or more. The mass ratio of the active material layer 40 may be 120% or less, 117% or less, 115% or less, 113% or less, or 112% or less. When the above range is satisfied, the mass of the active material of the active material layer of the second electrode 2 facing the active material layer of the first electrode 1 does not decrease, so that it is possible to solve the safety problems that may occur due to the change in the ratio of the amount of active materials loaded of the positive electrode and the negative electrode in an undesirable direction.

According to the exemplary embodiment, the second electrode may be a negative electrode, and may be the electrode according to the foregoing exemplary embodiment. In this case, it is possible to minimize the formation of the negative electrode sliding section that is generated when the active material slurry of the negative electrode is applied on the current collector. Accordingly, the mass of the active material of the active material layer of the negative electrode facing the active material layer of the positive electrode does not decrease, so that it is possible to solve safety problems that may occur because the ratio of the amount of active materials loaded of the positive electrode and the negative electrode in the corresponding region is changed in an undesirable direction. By solving the above problem, it is possible to maintain the ratio of the amount of active material loaded of the positive electrode and the negative electrode included in the electrode assembly, thereby solving the safety problem and stably increasing the current applied to the battery.

According to the exemplary embodiment, the inclined portion 41 or the inclined surface portion 33 provided on one side of the first electrode 1 and the inclined portion 41 or the inclined surface portion 33 provided on one side of the second electrode 2 are provided in opposite directions. In this case, the mass of the active material of the active material layer of the second electrode 2 facing the active material layer of the first electrode 1 does not decrease, so that it is possible to solve safety problems that may occur because the ratio of the amount of active materials loaded of the positive electrode and the negative electrode is changed in an undesirable direction.

According to the exemplary embodiment, the first electrode 1 is a positive electrode, and the second electrode 2 is a negative electrode. When the second electrode 2 is a negative electrode, it is possible to minimize the formation of the sliding section 5 of the negative electrode according to the exemplary embodiments of the present invention, and the mass of the active material of the active material layer of the negative electrode facing the active material layer of the positive electrode does not decrease, so that it is possible to prevent lithium from being completely precipitated in the negative electrode due to the change in the ratio of the amount of active materials loaded of the positive electrode and the negative electrode in an undesirable direction in the corresponding region, thereby solving safety problems.

Another exemplary embodiment of the present invention provides a secondary battery including at least one electrode assembly according to the foregoing exemplary embodiment.

According to the exemplary embodiment, the secondary battery may include the electrode assembly, a battery can, a sealing body, and a terminal.

In the electrode assembly, the first electrode 1 may be a positive electrode or a negative electrode, and the second electrode 2 corresponds to an electrode having a polarity opposite to that of the first electrode. The first electrode 1 and the second electrode 2 may have a sheet shape. The electrode assembly may have, for example, a jellyroll shape. That is, the electrode assembly may be manufactured by winding a stack formed by sequentially stacking the first electrode 1, the separation membrane, the second electrode 2, and the separation membrane at least once based on a winding center. In this case, an additional separation membrane may be provided on an outer peripheral surface of the electrode assembly to insulate the electrode assembly from the battery can.

Meanwhile, in the present invention, the positive electrode active material coated on the positive electrode current collector and the negative electrode active material coated on the negative electrode current collector may be used without limitation as long as they are known active materials in the art.

In one example, the positive electrode active material may include an alkali metal compound represented by the general chemical formula A[AxMy]O2+z (A includes at least one element among Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; $x \geq 0$, $1 \leq x+y \leq 2$, $-0.1 \leq z \leq 2$; the stoichiometric modulus of the components contained in x, y, z and M are selected such that the compound remains electrically neutral).

In another example, the positive electrode active material is an alkali metal compound xLiM1O2-(1-x) Li2M2O3 (M1 includes at least one element having an average oxidation state 3; M2 includes at least one element having an average oxidation state 4; $0 \leq x \leq 1$) disclosed in US6,677,082, US6,680,143, and the like.

In another example, the positive electrode active material is lithium metal phosphate expressed by the general chemical formula LiaM1xFe1-xM2yP1-yM3zO4-z(M1 includes at least one element selected from Ti, Si, Mn, Co, Fe, V, Cr, Mo, Ni, Nd, Al, Mg, and Al; M2 includes at least one element selected from Ti, Si, Mn, Co, Fe, V, Cr, Mo, Ni, Nd, Al, Mg, Al, As, Sb, Si, Ge, V, and S; M3 includes a halogen element selectively including F; $0 < a \leq 2$, $0 \leq x \leq 1$, $0 \leq y < 1$, $0 \leq z < 1$; the stoichiometric modulus of a component included in a, x, y, z, M1, M2, and M3 is selected so that the compound remains electrically neutral), or Li3M2(PO4)3 (M includes at least one element selected from Ti, Si, Mn, Fe, Co, V, Cr, Mo, Ni, Al, Mg, and Al).

Preferably, the active material of the positive electrode may include primary particles and/or secondary particles in which the primary particles are aggregated.

In one example, the active material of the negative electrode may be a carbon material, lithium metal or lithium metal compound, silicon or a silicon compound, tin or a tin compound. Metal oxides, such as TiO2 and SnO2, with a potential of less than 2V may also be used as the active material of the negative electrode. As the carbon material, all of low-crystalline carbon, high-crystalline carbon, and the like may be used.

As the separation membrane, a porous polymer film, for example, a porous polymer film made of a polyolefin-based polymer, such as ethylene homopolymer, propylene homopolymer, ethylene/butene copolymer, ethylene/hexene copolymer, and ethylene/methacrylate copolymer, may be used alone or may be stacked and used. As another example, the separation membrane may be a typical porous nonwoven fabric, for example, a nonwoven fabric made of high melting point glass fiber, polyethylene terephthalate fiber, or the like.

At least one surface of the separation membrane may include a coating layer of inorganic particles.

Further, it is also possible that the separation membrane itself is made of a coating layer of inorganic particles. The particles constituting the coating layer may have a structure bound to a binder so that an interstitial volume exists between adjacent particles.

The inorganic particles may be made of an inorganic material having a dielectric constant of 5 or more. As a non-limited example, the inorganic particle may include at least one material selected from the group consisting of Pb(Zr,Ti)O3(PZT), Pb1-xLaxZr1-yTiyO3(PLZT), PB(Mg3Nb2/3)O3-PbTiO3(PMN-PT), BaTiO3, hafnia(HfO2), SrTiO3, TiO2, A1203, ZrO2, SnO2, CeO2, MgO, CaO, ZnO, and Y2O3.

The electrolyte may be a salt having a structure, such as A+B-. Herein, A+ includes an ion composed of an alkali metal positive ion, such as Li+, Na+, and K+, or a combination thereof. Further, B- includes one or more negative ions selected from the group consisting of F-, Cl-, Br-, I-, NO3-, N(CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN-, and (CF3CF2SO2)2N-.

Further, the electrolyte may be dissolved in an organic solvent and used. As the organic solvent, propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and γbutyrolactone, or a mixture thereof may be used.

In the example, the secondary battery may include a battery can in which the electrode assembly is accommodated. The battery can may have a cylindrical shape, and may have a diameter of a circular shape of 30 mm to 55 mm at both ends and a height of 60 mm to 120 mm. For example, the circular diameter x height of the cylindrical battery can may be 46 mm x 60 mm, 46 mm x 80 mm, or 46 mm x 90 mm, 46 mm x 120 mm. The secondary battery may be a battery cell.

Preferably, the cylindrical battery cell may be, for example, a battery cell in which the ratio of the form factor (defined as a value obtained by dividing the diameter of the battery cell by the height, that is, the ratio of the diameter $\Phi$ to the height H) is greater than approximately 0.4.

Here, the form factor means a value indicating the diameter and height of the battery cell. A battery cell according to the exemplary embodiment of the present invention may be, for example, a 46110 cell, a 48750 cell, a 48110 cell, a 48800 cell, a 46800 cell, and a 46900 cell. In the numerical value representing the form factor, the first two numbers indicate the diameter of the cell, the next two numbers indicate the height of the cell, and the last number 0 indicates that the cell has a circular cross section.

The battery cell according to the exemplary embodiment of the present invention may be a battery cell having a substantially cylindrical shape, having a diameter of about 46 mm, a height of about 110 mm, and a form factor ratio of about 0.418.

A battery cell according to another exemplary embodiment may be a battery cell having a substantially cylindrical shape, having a diameter of about 48 mm, a height of about 75 mm, and a form factor ratio of about 0.640.

A battery cell according to another exemplary embodiment may be a battery cell having a substantially cylindrical shape, having a diameter of about 48 mm, a height of about 110 mm, and a form factor ratio of about 0.418.

A battery cell according to another exemplary embodiment may be a battery cell having a substantially cylindrical shape, having a diameter of about 48 mm, a height of about 80 mm, and a form factor ratio of about 0.600.

A battery cell according to another exemplary embodiment may be a battery cell having a substantially cylindrical shape, having a diameter of about 46 mm, a height of about 80 mm, and a form factor ratio of about 0.575.

A battery cell according to another exemplary embodiment may be a cylindrical battery cell having a substantially cylindrical shape, a diameter of about 46 mm, a height of about 90 mm, and a form factor ratio of 0.511.

In the above, although the present invention has been described with reference to limited exemplary embodiments and drawings, the present invention is not limited thereto and various modifications and variations are possible within the technical spirt of the present invention and the scope of equivalents of the claims to be described below by those skilled in the art to which the present invention pertains.

In view of the foregoing disclosure, the present invention may be implemented in accordance with the following itemized embodiment examples.

Item 1. An electrode coating die, comprising:

a slurry discharge part configured to discharge an active material slurry onto a current collector; and
a dam liquid discharge part provided on at least one side of the slurry discharge part and configured to discharge a dam liquid to form a dam layer covering at least a portion of an inclined surface portion provided at an edge portion of an active material slurry layer discharged from the slurry discharge part.

Item 2. The electrode coating die of item 1, further comprising:

a shim which partitions the slurry discharge part and the dam liquid discharge part; and
a pair of support parts disposed opposite to each other on opposite sides of the shim.

Item 3. The electrode coating die of item 2, wherein the shim includes a slurry passage for inducing the active material slurry to the slurry discharge part and a dam liquid passage for inducing the dam liquid to the dam liquid discharge part, and Wherein the pair of support parts includes a first support part disposed on an upstream side in a coating direction of the active material slurry and a second support part disposed on a downstream side in the coating direction.

Item 4. The electrode coating die of item 1, wherein an area of an opening of the slurry discharge part is larger than an area of an opening of the dam liquid discharge part.

Item 5. The electrode coating die of item 1, wherein a width perpendicular to a coating direction of the active material slurry of the slurry discharge part is larger than a width of the dam liquid discharge part.

Item 6. The electrode coating die of item 1, further comprising:

a partition wall provided between the slurry discharge part and the dam liquid discharge part, wherein the partition wall is provided to form the dam layer.

Item 7. The electrode coating die of item 6, wherein in the partition wall, a width perpendicular to a coating direction of the active material slurry is 3% or less of a sum of a width of the slurry discharge part and a width of the dam liquid discharge part.

Item 8. The electrode coating die of item 3, wherein an inclination angle ($\theta$) between the dam liquid passage and a width perpendicular to the coating direction of the dam liquid discharge part is 90° or less.

Item 9. The electrode coating die of item 1, wherein the dam liquid is the active material slurry.

Item 10. The electrode coating die of item 1, wherein a height of the dam liquid discharge part in a coating direction of the active material slurry is equal to or smaller than a height of the slurry discharge part.

Item 11. The electrode coating die of item 1, wherein the dam liquid discharge part is aligned with the slurry discharge part or offset in a downstream side in a coating direction of the active material slurry.

Item 12. The electrode coating die of item 10, wherein the height of the dam liquid discharge part is smaller than the height of the slurry discharge part, and a downstream edge of the dam liquid discharge part in the coating direction of the active material slurry is aligned with a downstream edge of the slurry discharge part.

Item 13. The electrode coating die of item 1, wherein the dam liquid discharge part is provided on opposite sides of the slurry discharge part.

Item 14. The electrode coating die of item 3, wherein the slurry discharge part is plural, and the dam liquid discharge part is plural, and the dam liquid discharge parts are provided on both sides of the slurry discharge part, and

Wherein the dam liquid discharge parts includes a first dam liquid discharge part connected to a dam liquid passage between two adjacent slurry discharge parts and divided into twooutlets, and a second dam liquid discharge part connected to a dam liquid passage at the outermost side of an plurality of slurry discharge parts and provided as a single discharge part.

Item 15. The electrode coating die of item 14, wherein the two outlets of the first dam liquid discharge part are spaced apart from each other to form an uncoated region in which an active material layer is not provided on the current collector.

Item 16. The electrode coating die of item 3, wherein the second support part further includes a dam liquid injector for injecting the dam liquid into the dam liquid passage.

Item 17. The electrode coating die of item 3, wherein the first support part further includes a slurry injector for injecting the active material slurry into the slurry passage.

Item 18. An electrode coating apparatus comprising:

a conveyor configured to continuously transfer a current collector of an electrode; and
the electrode coating die of item 1, which applies an active material layer on the current collector.

Item 19. A method of manufacturing an electrode, the method comprising:

preparing an active material slurry including an active material, a conductive material, and a solvent; and
applying the active material slurry on a current collector,
wherein applying the active material slurry includes forming an active material layer by discharging the active material slurry onto the current collector and discharging a dam liquid so as to form a dam layer covering at least a portion of an inclined surface portion provided on an edge portion of at least one side of an active material slurry layer coated on the current collector at the same time.

Item 20. A method of manufacturing an electrode, the method comprising:

preparing an active material slurry including an active material, a conductive material, and a solvent; and

applying the active material slurry on a current collector,

wherein applying the active material slurry includes forming an active material layer by discharging the active material slurry onto the current collector and discharging a dam liquid so as to form a dam layer covering at least a portion of an inclined surface portion provided on an edge portion of at least one side of an active material slurry layer coated on the current collector at the same time by using the electrode coating die of item 1.

Item 21. The method of item 19, further comprising: drying the active material layer after the coating operation.

Item 22. The method of item 19, further comprising: cutting the electrode in a coating direction of the active material slurry.

Item 23. An electrode comprising a current collector and an active material layer provided on the current collector,

wherein the active material layer includes an inclined portion having a height of 80% or less of a height of a highest point and a non-inclined portion having a height of more than 80% of the height of the highest point,

wherein a length from a boundary between the non-inclined portion and the inclined portion to a distal end of the inclined portion is 40% or less of a total length of the non-inclined portion and the inclined portion.

Item 24. An electrode comprising a current collector and an active material layer provided on the current collector,

wherein the active material layer includes an inclined portion having a height of 80% or less of a height of a highest point and a non-inclined portion having a height of more than 80% of the height of the highest point,

wherein an inclination angle ($\theta$) between the current collector and a line tangent to a boundary between the non-inclined portion and the inclined portion is 25° or more.

Item 25. An electrode comprising a current collector and an active material layer provided on the current collector,

wherein the active material layer includes an inclined portion having a height of 80% or less of a height of a highest point and a non-inclined portion having a height of more than 80% of the height of the highest point,

wherein an inclination angle ($\theta$) formed by the current collector and a line tangent to a distal end of the inclined portion is 25° or more.

Item 26. An electrode comprising a current collector and an active material layer provided on the current collector,

wherein the active material layer includes an inclined portion having a height of 80% or less of a height of a highest point and a non-inclined portion having a height of more than 80% of the height of the highest point,

wherein an inclination formed by a straight line connecting a boundary point of the non-inclined portion and the inclined portion and a distal end point of the inclined portion by the shortest distance with the current collector is 0.8 or more.

Item 27. An electrode comprising a current collector and an active material layer provided on the current collector,

wherein the active material layer includes an active material slurry layer coated on the current collector and a dam layer covering at least a portion of an inclined surface portion provided at an edge portion of the active material slurry layer, and wherein the dam layer is provided to cover 1% or more and 20% or less of an entire surface of the active material slurry layer.

Item 28. An electrode comprising a current collector and an active material layer provided on the current collector,

wherein the active material layer is provided by the method of manufacturing the electrode of item 19.

Item 29. The electrode of item 23, wherein an edge portion of the current collector includes an uncoated region in which the active material layer is not provided.

Item 30. The electrode of item30, wherein the inclined portion is a boundary between the active material layer and the uncoated region.

Item 31. An electrode assembly comprising: a first electrode, a separation membrane, and a second electrode stacked and wound,

wherein at least one of the first electrode and the second electrode is the electrode of any one of items 23 to 30.

Item 32. The electrode assembly of item 31, wherein the first electrode is a positive electrode, the second electrode is a negative electrode, and a mass ratio of the active material layer of the first electrode and the active material layer of the second electrode satisfies following formula 1,

[Equation 1]

$$100(\%) \leq X2/X1 \times 100(\%) \leq 120(\%)$$

Wherein in Equation 1, X1 is the mass of the active material layer of the first electrode, and X2 is the mass of the active material layer of the second electrode.

Item 33. The electrode assembly of item 31, wherein each of the first electrode and the second electrode has the inclined surface portion, and wherein the inclined surface portion provided on one side of the first electrode and the inclined surface portion provided on one side of the second electrode are provided in opposite directions to each other.

Item 34. The electrode assembly of item31, wherein the first electrode is a positive electrode and the second electrode is a negative electrode.

Item 35. A secondary battery comprising at least one electrode assembly of item 31.

**Claims**

1. An electrode coating die (100), comprising:

   a slurry discharge part (11) configured to discharge an active material slurry onto a current collector (30); and
   a dam liquid discharge part (12) provided on at least one side of the slurry discharge part (11) and configured to discharge a dam liquid which is the active material slurry to form a dam layer (32) covering at least a portion of an inclined surface portion (33) provided at an edge portion of an active material slurry layer (31) coated with an active material slurry discharged from the slurry discharge part (11).

2. The electrode coating die (100) of claim 1, further comprising:

   a shim (10) which partitions the slurry discharge part (11) and the dam liquid discharge part (12); and
   a pair of support parts (20, 21, 22) disposed opposite to each other on both sides of the shim (10).

3. The electrode coating die (100) of claim 2, wherein the shim (10) includes a slurry passage (14) for inducing the active material slurry to the slurry discharge part (11) and a dam liquid passage (15) for inducing the dam liquid to the dam liquid discharge part (12), and
the pair of support parts (20) includes a first support part (21) disposed on an upstream side in a coating direction (C) of the active material slurry and a second support part (22) disposed on a downstream side in the coating direction (C).

4. The electrode coating die (100) of any one of the preceding claims, wherein an area of an opening of the slurry discharge part (11) is larger than an area of an opening of the dam liquid discharge part (12).

5. The electrode coating die (100) of any one of the preceding claims, wherein a long width (11LW) perpendicular to a coating direction (C) of the active material slurry of the slurry discharge part (11) is larger than a long width (12LW) of the dam liquid discharge part (12).

6. The electrode coating die (100) of any one of the preceding claims, further comprising:

   a partition wall portion (13) provided between the slurry discharge part (11) and the dam liquid discharge part (12),
   wherein the partition wall portion (13) is provided to form the dam layer (32) covering at least a portion of the inclined surface portion (33) provided on the edge portion of the active material slurry layer (31).

7. The electrode coating die (100) of claim 6, wherein in the partition wall portion (13), a width perpendicular to a coating direction of the active material slurry hat(13W) is 3% or less of the sum of the long width of the slurry discharge part (11LW) and the long width of the dam liquid discharge part (12LW).

8. The electrode coating die (100) of claim 3, wherein an inclination angle ($\theta$) between the dam liquid passage and the long width direction of the dam liquid discharge part is 90° or less.

9. The electrode coating die (100) of any one of the preceding claims, wherein a short width of the dam liquid discharge part in a coating direction of the active material slurry is equal to or smaller than a short width of the slurry discharge part.

10. The electrode coating die (100) of any one of the preceding claims, wherein a position of the dam liquid discharge part (12) is provided on a straight line compared to a position of the slurry discharge part (11) or provided to be biased toward a downstream side in a coating direction of the active material slurry.

11. The electrode coating die (100) of claim 9, wherein a short width of the dam liquid discharge part is smaller than a short width of the slurry discharge part, and a position of the dam liquid discharge part is provided to be more inclined toward the downstream side in a coating direction of the active material slurry than a position of the slurry discharge part.

12. The electrode coating die (100) of any one of the preceding claims, wherein the dam liquid discharge part (12) is provided on both sides of the slurry discharge part (11).

13. The electrode coating die (100) of any one of the preceding claims, wherein the slurry discharge part is plural, and the dam liquid discharge parts are provided on both sides of the slurry discharge part, and
the dam liquid discharge part includes a first dam liquid discharge part between two adjacent slurry discharge parts and divided into two discharge parts, and a second dam liquid discharge part at the outermost side of the plurality of slurry discharge parts and provided as a single discharge part.

14. The electrode coating die (100) of claim 13, wherein two discharge parts included in the adjacent first dam liquid discharge part are provided to be spaced apart from each other so as to form an uncoated region in which an active material layer is not provided on the current collector.

15. The electrode coating die (100) of claim 3, wherein the second support part further includes a dam liquid injection part for injecting the dam liquid into the dam liquid passage.

FIG. 1

FIG. 2

(a)

(b)

FIG. 3

FIG. 4

(a)

(b)

FIG. 5

FIG. 6

(a)

(b)

FIG. 7

(a)

(b)

(c)

FIG. 8

FIG. 9

FIG. 10

FIG. 11

(a)

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210053323
- KR 1020220049992
- KR 1020130024766
- US 6677082 B
- US 6680143 B